# EUROPEAN PATENT SPECIFICATION

(11) **EP 3 743 693 B1**
(45) Date of publication and mention of the grant of the patent: **08.11.2023**
(21) Application number: 19706027.0
(22) Date of filing: 17.01.2019
(51) Int. Cl.: G01F 1/66, G01F 1/667, G01F 15/02

(54) **ULTRASONIC MEASUREMENT SYSTEM**
ULTRASCHALLMESSSYSTEM
SYSTÈME DE MESURE PAR ULTRASONS

(30) Priority: 24.01.2018 CH 842018
(43) Date of publication of application: 02.12.2020
(73) Proprietor: Landis+Gyr AG, 6330 Cham (CH)
(72) Inventor: BAILEY, Jonathan James, Urmston, Manchester M41 8TY (GB); HAIGH, Darren, Warrington WA5 8TB (GB); DEAN, Mathew, Cheadle, Greater Manchester SK8 2AQ (GB); TURCENINOFF, George, Stockport SK7 3BZ (GB)
(74) Representative: Marks & Clerk LLP
(86) International application number: PCT/IB2019/050383
(87) International publication number: WO 2019/145828

(56) References cited:
- EP-A1- 2 857 803
- WO-A1-2016/051285
- CH-A- 494 437
- JP-A- 2009 281 900
- JP-A- 2012 163 518
- US-A- 5 274 328

## Description

The present invention relates to an ultrasonic measurement system with two transducer assemblies.

### Technological Background

Transducer assemblies and ultrasonic measurement systems with two transducer assemblies are well known. For example, ultrasonic transducers are used to determine flow rates of media like gases or liquids, or to detect gas bubbles or particles in flowing media. However, with current transducer assemblies and measurement systems, measurement and detection accuracy varies with the temperature of the respective medium. Hence, as a result, the temperature range at which known transducer assemblies and measurement systems can be used with sufficient measurement and detection accuracy is very limited.

### Description of the Invention

In view of the above-mentioned disadvantage, an object underlying the invention is to provide a measurement system, which can be used with an improved measurement and detection accuracy within a broader temperature range than transducer assemblies and a measurement systems according to the prior art. The measurement system of the present invention is an ultrasonic measurement system according to appended patent claim 1.

For the above-mentioned measurement system, the transducer assembly comprises a structure-born sound attenuation device that exerts pressure onto the connecting cable.

EP 2 857 803 A1 refers to an ultrasonic flow meter unit that is mounted to a fluid passage through which a measurement target fluid flows. The ultrasonic flow meter comprises a pair of ultrasonic transducers each including a piezoelectric substrate, and an acoustic matching member; a measuring circuit which measures a flow of a target fluid based on time for which an ultrasonic pulse propagates between the pair of ultrasonic transducers; and an insulating damping member unitarily formed to cover at least a portion of each of a portion of each of the pair of ultrasonic transducers, which portion contacts the fluid passage, the piezoelectric substrate, and the measuring circuit.

Surprisingly, it has been found that by impinging mechanical pressure onto the wires, the measurement accuracy does not deteriorate or deteriorates at least less with temperature. It appears that the wires of the cable and in particular their coating, e.g. polytetrafluorethylene or another insulator, e.g. a plastic material, transport ultrasonic sound as structure-born sound. For example, at an end of the cable that is arranged opposite to the ultrasonic transducer, the structure-born sound is reflected and then transported via the cable back to the ultrasonic transducer, where it may be incorrectly sensed as measurement sound. Due to the fact that the speed of sound in the medium changes with the temperature of the medium, the time difference between the receipt of a real ultrasound measurement signal, e.g. emitted by another transducer assembly, and of the reflected structure-born sound varies and causes a periodic change of measurement or detection accuracy with the temperature as variable. By exerting the pressure onto the cable, the structure-born sound can be attenuated or reflected such that it reaches the ultrasonic transducer outside of a certain time window, within which the real ultrasound measurement signal is expected to reach the ultrasonic transducer. Thus, the measurement or detection accuracy does not periodically deteriorate or is at least decreased due to temperature changes in comparison with the prior art.

According to a possible embodiment, the attenuation device is configured to exert pressure onto the cable, such that the circumference of each of the wires is at least partly or sectionwise or even completely impinged with pressure. Hence, when impinging essentially the complete circumference of the cable and in particular of at least one or even all of the wires, the structure-born sound conductivity may be reduced to some extent or even completely along the circumference and the effect of the attenuation device may be improved.

According to a possible embodiment, the attenuation device comprises a rigid element, around which the cable it tightly wound. By providing a rigid element and by tightly winding the cable around the rigid element, the attenuation device may be provided easily and may even be added to an existing transducer assembly.

For example, the part of the cable that is tightly wound around the rigid element may not be readily movable with respect to the rigid element. For example, the part of the cable that is tightly wound around the rigid element may be tensioned or strained more than another, not tightly wound, section of the cable. Hence, the mechanical stress of the part of the cable that is tightly wound around the rigid element may be higher than the mechanical stress of another, not tightly wound, section of the cable.

According to a possible embodiment, the rigid element is a cable clip. Thus, it may be possible to not only improve measurement and detection accuracy, but also to avoid that the structure-born sound is emitted or transferred to another element and for example to another transducer assembly, as due to the cable clip, the cable may be fixed, for example at a holding part of the measurement system, and, thus, kept away from the other element. The cable clip may simply be clipped on or into the holding part and may be formed of plastic, which is manufacturable in a cost-efficient manner.

According to a possible embodiment, the attenuation device comprises a cylindrical pressure element that presses or compresses the cable, wherein the cable is at least sectionwise arranged in the cylindrical pressure element. Thus, the additional installation space required for the attenuation device may be reduced to a minimum or even no additional installation space may be required for the attenuation device formed as a cylindrical pressure element. By arranging the cable at least sectionwise in the cylindrical pressure element, pressure can be exerted at several locations or at a continuous section of the cable along a length direction and/or along a circumferential direction of the cable, thereby further improving the effects of the attenuation device.

According to a possible embodiment, a section of the cable forms a loop, wherein the loop is at least sectionwise arranged in the cylindrical pressure element. By forming the loop, it may be possible to impinge pressure at more locations or at a longer continuous section of the cable along a length direction of the cable, thereby further improving the effects of the attenuation device.

According to a possible embodiment, the cylindrical pressure element is at least one of an elastic sleeve, a shrink-on tube, a shrink disc and a bushing. If the cylindrical pressure element is an elastic sleeve, a shrink-on tube or a shrink disc, the cable may project from one or from both ends of the cylindrical pressure element, which may facilitate installation of the transducer assembly. If the cylindrical pressure element is a bushing, the cable may project from only one end of the cylindrical pressure element, which may allow for a simple reduction for cable length, if required. The section which is impinged with pressure may be pressed into the bushing, thereby generating the pressure. Alternatively or additionally, the bushing may be elastically and/or plastically compressed or squeezed with the cable inside of the bushing. For example, the bushing may be a plastic crimp ferrule.

According to a possible embodiment, the attenuation device comprises an element of solidified medium, through which the cable extends. While applying the medium, the medium may be in a liquid state or in a plastically deformable state and sets or cures after application. For example, the medium may be a dissipative medium. When applying the medium that forms the solidified element in a liquid or a plastically deformable state, the medium may be easily brought in close contact with the cable. When closely contacting the wire and/or the cables, the medium almost completely or almost gapless or even completely or gapless contacts the circumference of the cable and/or or the wires. Merely in areas where the wires contact each other, contact gaps may remain. Thus, the effect of the attenuation device can be further improved.

When setting or curing, the medium may shrink, which increases the pressure the element impinges onto the cable and/or the wires. Additionally, if the cables contact each other and cause a contact gap, the shrinking medium may cause that the wires are being pressed against each other, which helps to further reduce structure-born sound propagation even at the contact gap.

The medium may comprise or even consist a plastic material, a sealant material, e.g. a sealant putty, a bonding material like for example glue, hot glue or Blu Tack. In particular in case the element is formed by injection molding, the medium may comprise a thermoplastic or may even consist thereof.

According to a possible embodiment, the attenuation device comprises at least one of the wires that exerts pressure onto the other one of the wires. As the one of the wires exerts pressure onto the other one of the wires, the effect of the attenuation device may at least partly or completely be achieved without any additional elements, thereby reducing complexity and costs of the transducer assembly. Alternatively, if one of the additional elements is provided, the one of the wires that exerts pressure onto the other one of the wires may further improve the effect of the attenuation device.

According to a possible embodiment, the attenuation device comprises a knot that exerts pressure onto the wires. The knot may be formed by a strand knotted around the cable and in particular around the two wires. Alternatively or additionally, the attenuation device may comprise a lace, cable tie or zip tie, which may have the same or at least similar effect as the knotted strand.

According to a possible embodiment, the knot may be formed by at least one or by both of the wires. For example, the knot is an over-hand knot formed by the cable. Thus, even existing transducer assemblies may be improved without additional material costs.

According to a possible embodiment, the knot and/or the lace, cable tie or zip tie tightly press against the cable and/or the wires, thereby exerting the pressure. Hence, the design of the attenuation device may be simplified.

According to a possible embodiment, along the cable, the attenuation device is closer to the ultrasonic transducer than to an end of the cable opposite the ultrasonic transducer. For example, the distance between the attenuation device and the ultrasonic transducer is less than 50%, less than 40%, less than 30%, less than 20%, less than 10% or even less than 5% of the total length of the cable. The travel time of reflected structure-born sound from and back to the ultrasonic transducer may thus be sufficiently shortened or transmittance of the structure-born sound to other elements can be avoided, such that it does not affect measurement or detection accuracy.

According to a possible embodiment, the transducer assembly may comprise one or more than one attenuation device, wherein, if several and for example at least two attenuation assemblies are present, the attenuation assemblies may all be the same or at least selected of the attenuation assemblies may be of different types, in particular any of the elements described herein. Thus, the design of the transducer assembly may be adaptable to installation or other circumstances in a flexible manner and the reduction of measurement or detection error may be achieved.

According to the present invention, in of the ultrasonic measurement system, along the cable, the distance between the ultrasonic transducer and the attenuation device is dimensioned such that the travel time of ultrasound emitted by the ultrasound transducer through the cable is shorter than half the travel time and for example shorter than 40%, shorter than 30%, shorter than 20%, shorter than 10% or even shorter than 5% of the travel time between the ultrasonic transducers along a measurement path. In particular if both transducers emit ultrasound at preselected points in time and for example at the same time, possible arrival of reflected structure-born sound may be well outside of a time window within which the measurement sound emitted by the respective other ultrasound transducer is expected to reach the ultrasound transducer, even in a wide temperature rage.

According to a possible embodiment of the ultrasonic measurement system, the two transducer assemblies are formed at a fixed distance to each other, wherein, along the cable of the one transducer assembly, the distance between the ultrasonic transducer and the attenuation device is dimensioned such that the section of the cable that is between the ultrasonic transducer and the attenuation device cannot readily be brought into contact with the respective other one of the transducer assemblies. Thus, the section of the cable between the ultrasonic transducer and the attenuation device, through which structure-born sound caused by the respective ultrasonic transducer can propagate, cannot contact the respective other cable, such that not only reflection of the structure-born sound to the ultrasonic transducer that emitted the sound, but also transmitting the structure-born sound to the respective other ultrasonic transducer may be prevented, again reducing the risk of too high measurement error or incorrect detection.

According to a possible embodiment of the ultrasonic measurement system, both of the at least two transducer assemblies are formed and/or arranged according to the invention, wherein the sum of the lengths of the sections between the ultrasonic transducer and the attenuation device of the respective transducer assemblies is smaller than the length of a free path between the transducer assemblies. Alternatively, the lengths of each section between the ultrasonic transducer and the attenuation device of each of the cables is shorter than half and for example shorter than 40%, shorter than 30%, shorter than 20%, shorter than 10% or shorter than 5% of the length of a free path between the transducer assemblies. Hence, none of the transducer assemblies may transmit structure-born sound directly to the respective other transducer assembly, even if their cables contact each other.

According to a possible embodiment of the ultrasonic measurement system, the ultrasonic measurement system is a flow meter configured to measure the flow rate of a medium with ultrasound. Thus, the flow rate may be measured with constant accuracy essentially independent of the temperature of the medium.

### Brief Description of Drawings

The invention is described hereinafter in more detail and in an exemplary manner using advantageous embodiments and with reference to the drawings.
- Figure 1: shows an exemplary embodiment of a transducer assembly in the ultrasonic measurement system according to the invention,
- Figure 3: shows another exemplary embodiment of the transducer assembly in the ultrasonic measurement system according to the invention,
- Figure 4: shows yet another exemplary embodiment of the transducer assembly in the ultrasonic measurement system according to the invention,
- Figure 5: shows a further exemplary embodiment of the transducer assembly in the ultrasonic measurement system according to the invention,
- Figure 6: shows an embodiment of an ultrasonic measurement system with two transducer assemblies, and
- Figure 7: shows an exemplary embodiment of a cross-section through a wire of the transducer assembly in the ultrasonic measurement system according to the invention.

### Ways of Executing the Invention

For elements, which correspond to each other in form and/or function, the same reference numerals are used in the following.

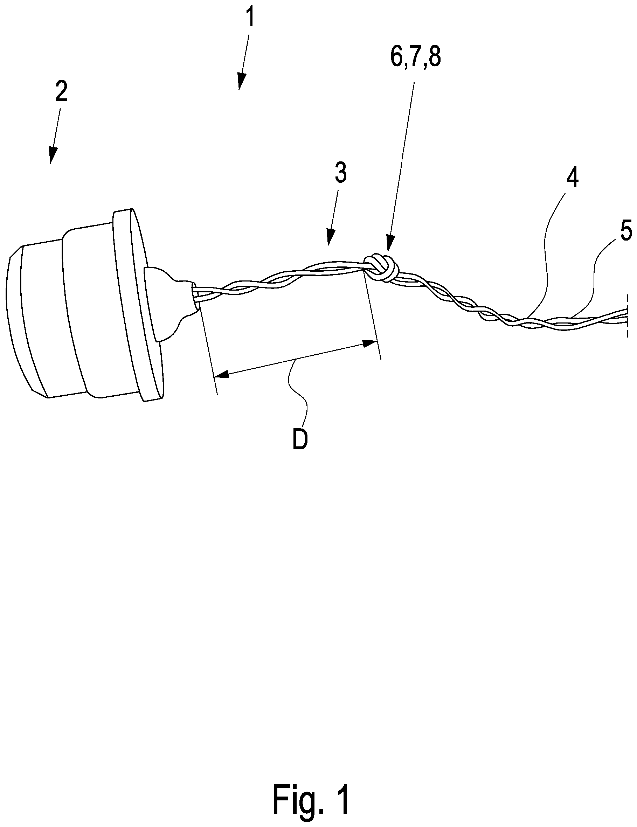

Figure 1 shows of a transducer assembly 1 with an ultrasonic transducer 2 and a connecting cable 3 with two wires 4, 5 in a schematic perspective view. The ultrasonic transducer 2 is configured to emit ultrasound when supplied with a suitable electrical signal via the cable 3. When receiving ultrasound from an external source, the ultrasonic transducer 2 is configured to generate an electrical signal and to output the electrical signal via the cable 3.

The transducer assembly 1 comprises a structure-born sound attenuation device 6, which is arranged along the cable 3 and which exerts a pressure onto the cable 3 and in particular onto the wires 4, 5. The attenuation device 6 may in particular be configured to exert pressure onto the cable 3, such that at least a part of the circumference or the complete circumference of the wires 4, 5 is impinged with pressure.

Along the cable 3, the attenuation device 6 has a distance D to the ultrasonic transducer 2. The distance D may be smaller than 50%, smaller than 40%, smaller than 30%, smaller than 20%, smaller than 10% or even smaller than 5% of the total length of the cable 3 measured between the transducer 2 and a connection point, such as a connector, where an end of the cable 3 opposing the transducer is connectable to an electrical arrangement or device, such as a printed circuit board (not shown).

In of figure 1, the attenuation device 6 comprises are even consists of at least one of the wires 4, 5. In particular, the attenuation device 6 may comprise both of the wires 4, 5, which form a knot 7. The knot 7 may be designated as attenuation element 8. In particular, the wires 4, 5 may be tightly knotted, e.g. to a handover knot 7. Due to the entwined or intertwined arrangement of the wires 4, 5 caused by the knot 7, the circumference of the wires 4, 5 may almost completely or even entirely be impinged with pressure. As an alternative or in addition to the knot 7 formed by the cable 3, the attenuation device 6 may comprise an attenuation element formed as a knot in another element, e.g. a strand, wherein the wires 4, 5 are arranged in and tightly pressed by that knot, or yet another attenuation element, e.g. a lace or zip tie, which surrounds the cable 3 and exerts the pressure.

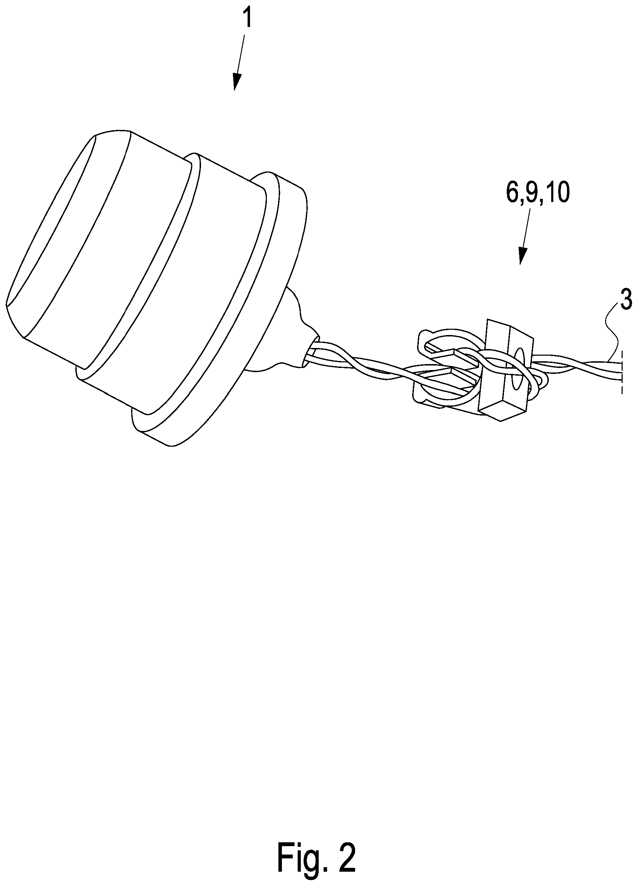

Figure 2 shows another transducer assembly 1 in a schematic perspective view. For the sake of brevity, only the differences with respect to figure 1 are looked at in the following. In figure 2, the attenuation device 6 comprises a rigid element 9, around which the cable 3 is tightly wound. For example, the part of the cable 3 that is tightly wound around the rigid element 9 cannot move freely with respect to rigid element 9, and may be exposed to a mechanical tension, strain or stress that is higher than other section of the cable 3 that are not tightly wound around the cable 3. The rigid element 9 may be any rigid element. In particular, the rigid element 9 may be a cable clip 10 and the cable 3 may be wound around a side or leg of the cable clip 10.

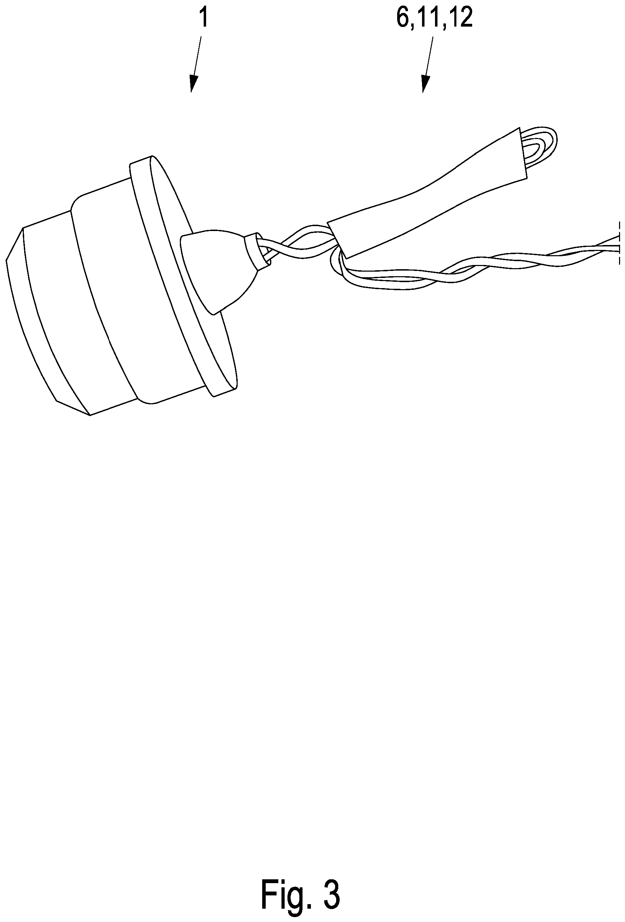

Figure 3 shows another transducer assembly 1 in a schematic perspective view. For the sake of brevity, only the differences with respect to figures 1 and 2 are looked at in the following. The attenuation device 6 of figure 3 comprises a cylindrical pressure element 11 that presses the cable 3, wherein the cable 3 is at least sectionwise arranged in the cylindrical pressure element 11. A section of the cable 3 may form a loop, wherein the loop is at least sectionwise arranged in the cylindrical pressure element 11. For example, the cylindrical pressure element 11 may be a shrink-on tube or a shrink disc. In the exemplary embodiment of figure 3, the cylindrical pressure element 11 is shown as an elastic sleeve 12. The cable 3 may protrude from one open end or from both open ends of the cylindrical pressure element 11.

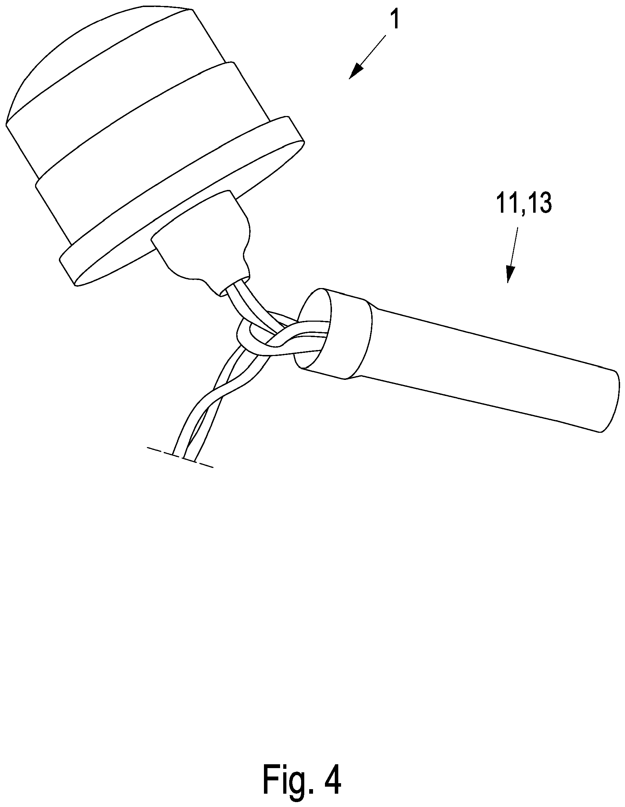

Figure 4 shows another transducer assembly 1 of figure 3 in a schematic perspective view. For the sake of brevity, only the differences with respect to figure 3 are described in the following. The cylindrical pressure element 11 of the exemplary embodiment of figure 4 is formed as a ferrule or bushing 13. The cable 3 may protrude from the one open the cylindrical pressure element 11. The cable 3 may be pressed into the bushing 13 or the bushing 13 may be pressed onto cable 3. For example, the bushing 13 may be a plastic crimp ferrule.

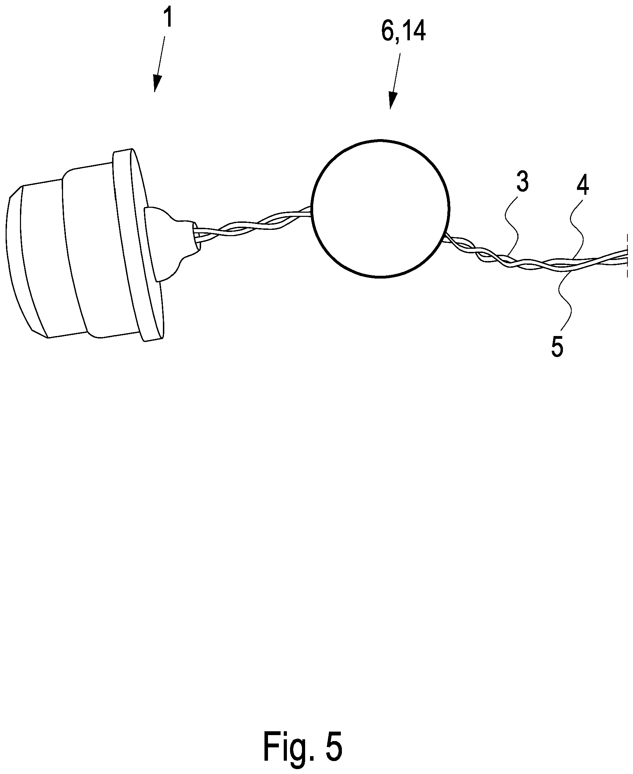

Figure 5 shows another transducer assembly 1 in a schematic perspective view. For the sake of brevity, only the differences with respect to the previous figures are looked at in the following. The attenuation device 6 of figure 3 comprises an element of solidified medium 14, through which the cable 3 extends.

While applying the medium, the medium may be in a liquid state or in a plastically deformable state and then set or cure after application, thereby forming the solidified element 14. For example, the medium may be a dissipative medium. When applying the medium forming the solidified element 14 in a liquid or a plastically deformable state, the medium may be easily brought in close contact with the cable 3 and in particular with the wires 4, 5. When closely contacting the cable 3 and/or the wires 4, 5, the medium may almost completely or almost gapless or even completely or gapless contact the circumference of the cable 3 and/or or the wires 3, 4. Merely at areas where the wires 4, 5 contact each other, contact gaps may remain. Thus, the effect of the attenuation device 6 may be further improved.

When setting or curing, the medium may shrink, which may increase the pressure the solidified element 14 impinges onto the cable 3 and/or the wires 3, 4. Additionally, if the wires 3, 4 contact each other and cause a contact gap, the shrinking medium may cause that the wires 3, 4 are pressed against each other, thereby further reducing structure-born sound propagation even at the contact gap. The medium may comprise a plastic material, a sealant material, e.g. a sealant putty, a bonding material like for example glue, hot glue or Blu Tack. In particular in case the element is formed by injection molding, the medium may comprise a thermoplastic.

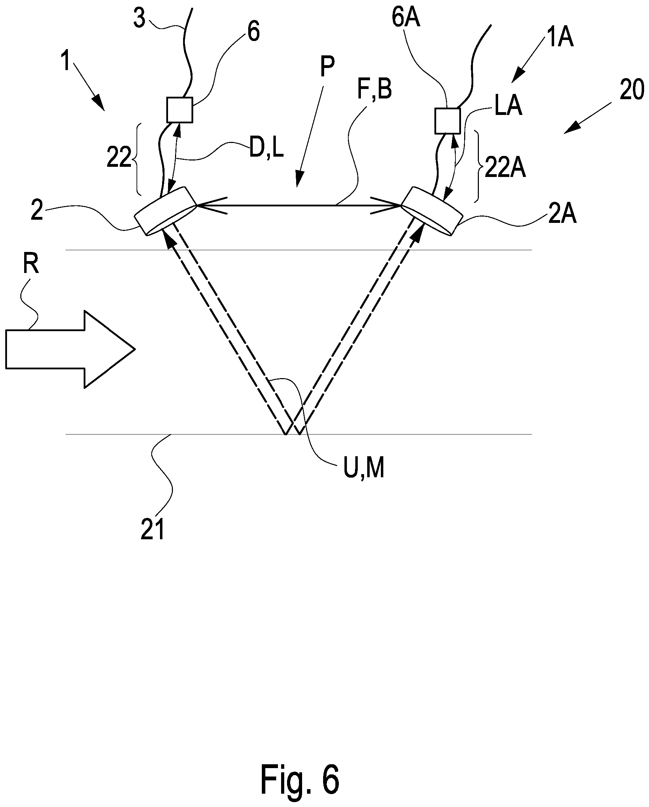

Figure 6 schematically shows an embodiment of an ultrasound measurement system 20 with two transducer assemblies 1, 1A in a cross-sectional view with a tube 21. For example, the ultrasonic measurement system 20 is a flow meter configured to measure the flow rate of a medium flowing through the tube 21 with ultrasound. The arrangement of the transducer assemblies 1, 1A and in particular of their ultrasound transducers 2, 2A may correspond to arrangements of known flow meters. At least one of the two transducer assemblies 1,1A and for example transducer assembly 1 is formed according to any of the previously described exemplary embodiments.

Along the cable 3 of the transducer assembly 1, the distance D between the ultrasonic transducer 2 and the attenuation device 6 may be dimensioned such that the travel time of ultrasound U emitted by the ultrasound transducer 1 through the cable 3 is shorter than half the travel time between ultrasonic transducers 2, 2A along a measurement path M. Along a flow path R of the medium flowing through the tube 21, the two transducer assemblies 1, 1A may be formed at a fixed distance F to each other. Along the cable 3 of the one transducer assembly 1, the length L of a section 22 of the cable 3, the section 22 being between the ultrasonic transducer 2 and the attenuation device 6, may be dimensioned such that the section 22 of the cable 3 may not readily be brought in contact with the other the transducer assembly 1A.

As shown in figure 6, both of the at least two transducer assemblies 1, 1A may be formed according to any of the exemplary embodiments of figure 1 to 6, wherein the sum of the lengths L, LA of the sections 22, 22A between the ultrasonic transducer 2, 2A and the attenuation device 6, 6A of the respective transducer assemblies 1, 1A is smaller than the length B of a free path P between the transducer assemblies 1, 1A. Alternatively, the length L, LA of each of the sections 22, 22A may be shorter than 50%, shorter than 40%, shorter than 30%, shorter than 20%, shorter than 10% or even shorter than 5% than the length B of the free path P between the transducer assemblies 1, 1A.

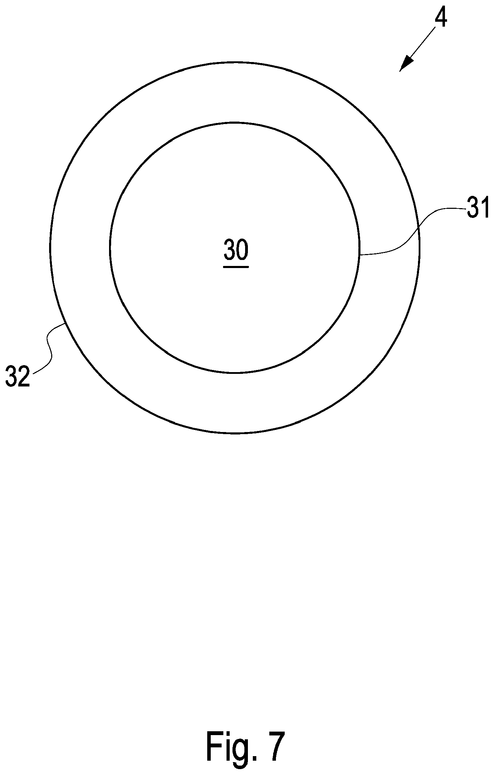

Figure 7 shows a schematic cross-sectional view of a wire 4 of the transducer assemblies 1, 1A according to any one of the previously described figures.

For the sake of simplicity, only wire the 4 of transducer assembly 1 is shown and described. The other wire 5 of the transducer assembly 1 and any one of the wires 4, 5 of the transducer assembly 1A may correspond to the described and shown wire 4. The wire 4 comprises a core 30 formed of an electrically conductive metal comprising for example aluminum or copper strands. Via the core 30, electrical signals can be conducted to and from the ultrasonic transducer 1. A lateral surface 31 of the core 30 is shown as being covered with an insulation coating 32, for example polytetrafluorethylene.

### Reference Signs

- 1, 1A: transducer assembly
- 2, 2A: ultrasonic transducer
- 3: cable
- 4, 5: wires
- 6, 6A: attenuation device
- 7: knot
- 8: attenuation element
- 9: rigid element
- 10: cable clip
- 11: cylindrical pressure element
- 12: elastic sleeve
- 13: bushing
- 14: element of solidified medium

- 20: ultrasound measurement system
- 21: tube
- 22, 22A: section between ultrasonic transducer and attenuation device

- 30: core
- 31: lateral surface of core
- 32: insulation coating

- B: length of free path
- D: distance
- F: fixed distance
- L, LA: length of section
- M: measurement path
- P: free path
- R: flow path of medium
- U: ultrasound

## Claims

1. Ultrasonic measurement system (20) with two transducer assemblies (1, 1A), each transducer assembly comprising an ultrasonic transducer (2, 2A) with a connecting cable (3) having two wires (4, 5), wherein
at least one of the transducer assemblies comprises a structure-born sound attenuation device (6, 6A) that exerts pressure onto the connecting cable (3),
**characterized in that**
along the cable (3), the distance (D) between the ultrasonic transducer (2) and the attenuation device (6) is dimensioned such that the travel time of ultrasound (U) emitted by the ultrasound transducer (2) through the cable (3) is shorter than half the travel time between the ultrasonic transducers (2, 2A) along a measurement path (M).

2. Ultrasonic measurement system (20) according to claim 1, **characterized in that** the two transducer assemblies (1, 1A) are formed at a fixed distance (F) to each other, wherein, along the cable (3) of the one transducer assembly (1), the distance (D) between the ultrasonic transducer (2) and the attenuation device (6) is dimensioned such that the section (22) of the cable (3) that is between the ultrasonic transducer (2) and the attenuation device (6) cannot readily be brought in contact with the other of the transducer assemblies (1 A).

3. Ultrasonic measurement system (20) according to claim 1, **characterized in that** both of the two transducer assemblies (1, 1A) are formed according to claim 1, wherein the sum of the lengths (L. LA) of the sections (22, 22A) between the ultrasonic transducer (2, 2A) and the attenuation device (6, 6A) of the respective transducer assemblies (1, 1 A) is smaller than the length (B) of a free path (P) between the transducer assemblies (1, 1 A).

4. Ultrasonic measurement system (20) according to any preceding claim, **characterized in that** the attenuation device (6, 6A) is configured to exert pressure onto the cable (3), such that the circumference of each of the wires (4, 5) is at least partly impinged with pressure.

5. Ultrasonic measurement system (20) according to any preceding claim, **characterized in that** the attenuation device (6, 6A) comprises a rigid element (9), around which the cable (3) is tightly wound.

6. Ultrasonic measurement system (20) according to claim 5, **characterized in that** the rigid element (9) is a cable clip (10).

7. Ultrasonic measurement system (20)) according to any preceding claim , **characterized in that** the attenuation device (6, 6A) comprises a cylindrical pressure element (11) that compresses the cable (3), wherein the cable (3) is at least sectionwise arranged in the cylindrical pressure element (11).

8. Ultrasonic measurement system (20) according to claim 7, **characterized in that** a section of the cable (3) forms a loop, wherein the loop is at least sectionwise arranged in the cylindrical pressure element (11).

9. Ultrasonic measurement system (20) according to claim 7 or 8, **characterized in that** the cylindrical pressure element (11) is an elastic sleeve (12), a shrink-on tube, a shrink disc or a bushing (13).

10. Ultrasonic measurement system (20) according to any of claims 1 to 9, **characterized in that** the attenuation device (6, 6A) comprises an element of solidified medium (14), through which the cable (3) extends.

11. Ultrasonic measurement system (20) according to any of claims 1 to 10, **characterized in that** by means of the attenuation device (6. 6A), at least one of the wires (4, 5) exerts pressure onto the other one of the wires (4, 5).

12. Ultrasonic measurement system (20) according to any of claims 1 to 11, **characterized in that** the attenuation device (6, 6A) comprises a knot (7) that exerts pressure onto at least one of the wires (4, 5).

13. Ultrasonic measurement system (20) according to any of claims 1 to 12, **characterized in that** along the cable (3), the attenuation device (6, 6A) is closer to the ultrasonic transducer (2, 2A) than to an end of the cable (3) opposite to the ultrasonic transducer (2, 2A).

## Patentansprüche

1. Ultraschallmesssystem (20) mit zwei Wandlerbaugruppen (1, 1A), wobei jede Wandlerbaugruppe einen Ultraschallwandler (2, 2A) mit einem Verbindungskabel (3) mit zwei Drähten (4, 5) umfasst,
wobei
mindestens eine der Wandlerbaugruppen eine Körperschalldämpfungsvorrichtung (6, 6A) umfasst, die Druck auf das Verbindungskabel (3) ausübt,
**dadurch gekennzeichnet, dass**
entlang des Kabels (3) der Abstand (D) zwischen dem Ultraschallwandler (2) und der Dämpfungsvorrichtung (6) derart bemessen ist, dass die Laufzeit des vom Ultraschallwandler (2) ausgesandten Ultraschalls (U) durch das Kabel (3) kürzer ist als die Hälfte der Laufzeit zwischen den Ultraschallwandlern (2, 2A) entlang einer Messstrecke (M).

2. Ultraschallmesssystem (20) nach Anspruch 1, **dadurch gekennzeichnet, dass** die beiden Wandlerbaugruppen (1, 1A) in einem festen Abstand (F) zueinander ausgebildet sind, wobei entlang des Kabels (3) der einen Wandlerbaugruppe (1) der Abstand (D) zwischen dem Ultraschallwandler (2) und der Dämpfungsvorrichtung (6) derart bemessen ist, dass der Abschnitt (22) des Kabels (3), der sich zwischen dem Ultraschallwandler (2) und der Dämpfungsvorrichtung (6) befindet, nicht ohne Weiteres mit der anderen der Wandlerbaugruppen (1A) in Kontakt gebracht werden kann.

3. Ultraschallmesssystem (20) nach Anspruch 1, **dadurch gekennzeichnet, dass** beide der zwei Wandlerbaugruppen (1, 1A) nach Anspruch 1 ausgebildet sind, wobei die Summe der Längen (L. LA) der Abschnitte (22, 22A) zwischen dem Ultraschallwandler (2, 2A) und der Dämpfungsvorrichtung (6, 6A) der jeweiligen Wandlerbaugruppen (1, 1 A) kleiner ist als die Länge (B) eines freien Weges (P) zwischen den Wandlerbaugruppen (1, 1A).

4. Ultraschallmesssystem (20) nach einem der vorhergehenden Ansprüche, **dadurch gekennzeichnet, dass** die Dämpfungsvorrichtung (6, 6A) derart konfiguriert ist, dass sie Druck auf das Kabel (3) ausübt, derart dass der Umfang jedes der Drähte (4, 5) mindestens teilweise mit Druck beaufschlagt wird.

5. Ultraschallmesssystem (20) nach einem der vorhergehenden Ansprüche, **dadurch gekennzeichnet, dass** die Dämpfungsvorrichtung (6, 6A) ein starres Element (9) umfasst, um das das Kabel (3) fest gewickelt ist.

6. Ultraschallmesssystem (20) nach Anspruch 5, **dadurch gekennzeichnet, dass** das starre Element (9) eine Kabelklemme (10) ist.

7. Ultraschallmesssystem (20) nach einem der vorhergehenden Ansprüche, **dadurch gekennzeichnet, dass** die Dämpfungsvorrichtung (6, 6A) ein zylindrisches Druckelement (11) umfasst, das das Kabel (3) komprimiert, wobei das Kabel (3) mindestens abschnittsweise in dem zylindrischen Druckelement (11) angeordnet ist.

8. Ultraschallmesssystem (20) nach Anspruch 7, **dadurch gekennzeichnet, dass** ein Abschnitt des Kabels (3) eine Schleife bildet, wobei die Schleife mindestens abschnittsweise in dem zylindrischen Druckelement (11) angeordnet ist.

9. Ultraschallmesssystem (20) nach Anspruch 7 oder 8, **dadurch gekennzeichnet, dass** das zylindrische Druckelement (11) eine elastische Hülse (12), ein Schrumpfschlauch, eine Schrumpfscheibe oder eine Muffe (13) ist.

10. Ultraschallmesssystem (20) nach einem der Ansprüche 1 bis 9, **dadurch gekennzeichnet, dass** die Dämpfungsvorrichtung (6, 6A) ein Element aus verfestigtem Medium (14) umfasst, durch das sich das Kabel (3) erstreckt.

11. Ultraschallmesssystem (20) nach einem der Ansprüche 1 bis 10, **dadurch gekennzeichnet, dass** mittels der Dämpfungsvorrichtung (6, 6A) mindestens einer der Drähte (4, 5) Druck auf den anderen der Drähte (4, 5) ausübt.

12. Ultraschallmesssystem (20) nach einem der Ansprüche 1 bis 11, **dadurch gekennzeichnet, dass** die Dämpfungsvorrichtung (6, 6A) einen Knoten (7) umfasst, der Druck auf mindestens einen der Drähte (4, 5) ausübt.

13. Ultraschallmesssystem (20) nach einem der Ansprüche 1 bis 12, **dadurch gekennzeichnet, dass** sich die Dämpfungsvorrichtung (6, 6A) entlang des Kabels (3) näher am Ultraschallwandler (2, 2A) befindet als an einem dem Ultraschallwandler (2, 2A) gegenüberliegenden Ende des Kabels (3).

## Revendications

1. Système de mesure par ultrasons (20) comportant deux ensembles transducteurs (1, 1A), chaque ensemble transducteur comprenant un transducteur à ultrasons (2, 2A) comportant un câble de connexion (3) comportant deux fils (4, 5),
dans lequel
au moins un des ensembles transducteurs comprend un dispositif d'atténuation de bruit de structure (6, 6A) qui exerce une pression sur le câble de connexion (3),
**caractérisé en ce que**,
le long du câble (3), la distance (D) entre le transducteur à ultrasons (2) et le dispositif d'atténuation (6) est dimensionnée de telle manière que le temps de propagation des ultrasons (U) émis par le transducteur à ultrasons (2) à travers le câble (3) est plus court que la moitié du temps de propagation entre les transducteurs à ultrasons (2, 2A) le long d'un trajet de mesure (M).

2. Système de mesure par ultrasons (20) selon la revendication 1, **caractérisé en ce que** les deux ensembles transducteurs (1, 1A) sont formés à une distance fixe (F) l'un de l'autre, dans lequel, le long du câble (3) de l'un ensemble transducteur (1), la distance (D) entre le transducteur à ultrasons (2) et le dispositif d'atténuation (6) est dimensionnée de telle manière que la section (22) du câble (3) qui est entre le transducteur à ultrasons (2) et le dispositif d'atténuation (6) ne peut pas être facilement mise en contact avec l'autre des ensembles transducteurs (1A).

3. Système de mesure par ultrasons (20) selon la revendication 1, **caractérisé en ce que** les deux des deux ensembles transducteurs (1, 1A) sont formés selon la revendication 1, dans lequel la somme des longueurs (L. LA) des sections (22, 22A) entre le transducteur à ultrasons (2, 2A) et le dispositif d'atténuation (6, 6A) des ensembles transducteurs respectifs (1, 1A) est inférieure à la longueur (B) d'un trajet libre (P) entre les ensembles transducteurs (1, 1A).

4. Système de mesure par ultrasons (20) selon l'une quelconque des revendications précédentes, **caractérisé en ce que** le dispositif d'atténuation (6, 6A) est configuré pour exercer une pression sur le câble (3), de manière à ce que la circonférence de chacun des fils (4, 5) soit au moins en partie exposée à la pression.

5. Système de mesure par ultrasons (20) selon l'une quelconque des revendications précédentes, **caractérisé en ce que** le dispositif d'atténuation (6, 6A) comprend un élément rigide (9), autour duquel le câble (3) est étroitement enroulé.

6. Système de mesure par ultrasons (20) selon la revendication 5, **caractérisé en ce que** l'élément rigide (9) est une attache de câble (10).

7. Système de mesure par ultrasons (20) selon l'une quelconque des revendications précédentes, **caractérisé en ce que** le dispositif d'atténuation (6, 6A) comprend un élément de pression cylindrique (11) qui comprime le câble (3), dans lequel le câble (3) est disposé au moins par sections dans l'élément de pression cylindrique (11).

8. Système de mesure par ultrasons (20) selon la revendication 7, **caractérisé en ce qu'**une section du câble (3) forme une boucle, dans lequel la boucle est disposée au moins par sections dans l'élément de pression cylindrique (11).

9. Système de mesure par ultrasons (20) selon la revendication 7 ou 8, **caractérisé en ce que** l'élément de pression cylindrique (11) est un manchon élastique (12), une gaine rétractable, un disque rétractable ou une douille (13).

10. Système de mesure par ultrasons (20) selon l'une quelconque des revendications 1 à 9, **caractérisé en ce que** le dispositif d'atténuation (6, 6A) comprend un élément d'un milieu solidifié (14), à travers lequel le câble (3) s'étend.

11. Système de mesure par ultrasons (20) selon l'une quelconque des revendications 1 à 10, **caractérisé en ce qu'**au moyen du dispositif d'atténuation (6, 6A), au moins l'un des fils (4, 5) exerce une pression sur l'autre des fils (4, 5).

12. Système de mesure par ultrasons (20) selon l'une quelconque des revendications 1 à 11, **caractérisé en ce que** le dispositif d'atténuation (6, 6A) comprend un noeud (7) qui exerce une pression sur au moins l'un des fils (4, 5).

13. Système de mesure par ultrasons (20) selon l'une quelconque des revendications 1 à 12, **caractérisé en ce que**, le long du câble (3), le dispositif d'atténuation (6, 6A) est plus proche du transducteur à ultrasons (2, 2A) que d'une extrémité du câble (3) opposée au transducteur à ultrasons (2, 2A).
